# FASCICULE DE BREVET EUROPEEN

(11) **EP 3 247 574 B1**
(45) Date de publication et mention de la délivrance du brevet: **05.12.2018**
(21) Numéro de dépôt: 16701040.4
(22) Date de dépôt: 20.01.2016
(51) Int. Cl.: B60C 7/14, B60C 7/12, B60C 7/10

(54) **DISPOSITIF DE TYPE PNEUMATIQUE POUR VEHICULE**
REIFENARTIGE VORRICHTUNG FÜR EIN FAHRZEUG
TYRE-TYPE DEVICE FOR A VEHICLE

(30) Priorité: 22.01.2015 FR 1550493
(43) Date de publication de la demande: 29.11.2017
(73) Titulaire: Compagnie Générale des Etablissements Michelin, 63000 Clermont-Ferrand (FR)
(72) Inventeur: VILCOT, Florian, 63040 Clermont-Ferrand Cedex 9 (FR)
(74) Mandataire: Millanvois, Patrick Jacques Jean
(86) Numéro de dépôt international: PCT/EP2016/051099
(87) Numéro de publication internationale: WO 2016/116490

(56) Documents cités:
- US-A- 519 976
- US-A- 4 235 270
- US-A1- 2013 048 174

## Description

La présente invention concerne un dispositif de type pneumatique, destiné à équiper un véhicule. Ce dispositif de type pneumatique peut être utilisé sur tous les types de véhicules tels que des véhicules à deux roues, des véhicules de tourisme, des véhicules poids lourds, agricoles, de génie civil ou des avions ou, plus généralement, sur tout dispositif roulant.

Un pneumatique classique est une structure torique, destinée à être montée sur une jante, pressurisée par un gaz de gonflage et écrasée sur un sol sous l'action d'une charge. Le pneumatique possède en tout point de sa surface de roulement, destinée à entrer en contact avec un sol, une double courbure: une courbure circonférentielle et une courbure méridienne. Par courbure circonférentielle, on entend une courbure dans un plan circonférentiel, défini par une direction circonférentielle, tangente à la surface de roulement du pneumatique selon la direction de roulement du pneumatique, et une direction radiale, perpendiculaire à l'axe de rotation du pneumatique. Par courbure méridienne, on entend une courbure dans un plan méridien ou radial, défini par une direction axiale, parallèle à l'axe de rotation du pneumatique, et une direction radiale, perpendiculaire à l'axe de rotation du pneumatique.

Dans ce qui suit, l'expression «radialement intérieur, respectivement radialement extérieur» signifie «plus proche, respectivement plus éloigné de l'axe de rotation du pneumatique». L'expression «axialement intérieur, respectivement axialement extérieur» signifie «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Il est connu que la mise à plat du pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du pneumatique impacte les performances du pneumatique, en particulier la résistance au roulement, l'adhérence, l'usure et le bruit.

Par conséquent, l'homme du métier, spécialiste du pneumatique, cherchant à obtenir le bon compromis entre les performances attendues du pneumatique telles que, de façon non exhaustive, l'usure, l'adhérence, l'endurance, la résistance au roulement et le bruit, a développé des solutions alternatives au pneumatique classique pour optimiser sa mise à plat.

Un pneumatique classique de l'état de la technique a généralement une grande courbure méridienne, c'est-à-dire un petit rayon de courbure méridien, au niveau des extrémités axiales de la bande de roulement, appelées épaules, lorsque le pneumatique, monté sur sa jante de montage et gonflé à sa pression d'utilisation recommandée, est soumis à sa charge de service. La jante de montage, la pression d'utilisation et la charge de service sont définies par des normes, telles que, par exemple, les normes de la European Tyre and Rim Technical Organization (ETRTO). Un pneumatique classique porte la charge appliquée, essentiellement par les extrémités axiales de la bande de roulement, ou épaules, et par les flancs reliant la bande roulement à des bourrelets assurant la liaison mécanique du pneumatique avec sa jante de montage. Il est connu qu'une mise à plat méridienne d'un pneumatique classique, avec une petite courbure méridienne au niveau des épaules, est généralement difficile à obtenir.

Le document US 4235270 décrit un pneumatique selon le préambule de la revendication 1 ayant un corps annulaire en matériau élastomérique, comprenant une partie cylindrique radialement extérieure, à la périphérie du pneumatique, pouvant comprendre une bande de roulement, et une partie cylindrique radialement intérieure, destinée à être montée sur une jante. Une pluralité de parois, espacées selon la direction circonférentielle, s'étendent depuis la partie cylindrique radialement intérieure jusqu'à la partie cylindrique radialement extérieure, et assurent le port de la charge. En outre, des flancs peuvent relier les deux parties cylindriques respectivement radialement intérieure et radialement extérieure, pour former, en association avec la bande de roulement et les flancs, une cavité fermée et permettre ainsi la pressurisation du pneumatique. Un tel pneumatique a toutefois une masse élevée, par rapport à un pneumatique classique, et, en raison de son caractère massif, est susceptible de dissiper une énergie élevée, pouvant limiter son endurance, et donc sa durée de vie.

Le document WO 2009087291 décrit une structure pneumatique comprenant deux viroles annulaires respectivement interne, ou radialement intérieure, et externe, ou radialement extérieure, reliées par deux flancs et par une structure porteuse. Selon cette invention, la structure porteuse est pressurisée et partage le volume annulaire du pneumatique en une pluralité de compartiments ou d'alvéoles, et les flancs sont liés ou intégrés à la structure porteuse. Dans ce cas, la charge appliquée est portée à la fois par la structure porteuse et les flancs. La répartition de pression dans l'aire de contact n'est pas homogène dans la largeur axiale de l'aire de contact, avec des surpressions au niveau des épaules dues à la difficulté de mise à plat méridienne en raison de la liaison entre les flancs et la structure porteuse. Ces surpressions au niveau des épaules sont susceptibles de générer une usure importante des épaules de la bande de roulement.

Le document WO 2005007422 décrit une roue adaptative comprenant une bande adaptative et une pluralité de rayons s'étendant radialement vers l'intérieur depuis la bande adaptative jusqu'à un moyeu. La bande adaptative est destinée à s'adapter à la surface de contact avec un sol et à envelopper les obstacles. Les rayons transmettent la charge portée entre la bande adaptative et le moyeu, grâce à la mise en tension des rayons qui ne sont pas en contact avec le sol. Une telle roue adaptative nécessite une optimisation de la répartition des rayons pour garantir une périphérie sensiblement cylindrique. De plus, une roue adaptative a une masse relativement élevée par rapport à un pneumatique classique.

La présente invention a pour objectif de proposer un dispositif de type pneumatique avec une mise à plat améliorée de sa bande de roulement, lorsqu'il est soumis à une charge.

Ce but a été atteint selon l'invention par un dispositif de type pneumatique, destiné à équiper un véhicule, comprenant:
- une structure de révolution radialement extérieure dont l'axe de révolution est l'axe de rotation du dispositif de type pneumatique et destinée à entrer en contact avec un sol par l'intermédiaire d'une bande de roulement comprenant au moins un matériau élastomérique, la structure de révolution radialement extérieure ayant deux extrémités axiales et comprenant une armature circonférentielle de renforcement,
- une structure de révolution radialement intérieure, coaxiale à la structure de révolution radialement extérieure et destinée à assurer la liaison du dispositif de type pneumatique avec un moyen de montage sur le véhicule, la structure de révolution radialement intérieure ayant deux extrémités axiales et comprenant au moins un matériau polymérique,
- un espace annulaire intérieur de hauteur radiale moyenne H, radialement délimité par les structures de révolution respectivement radialement extérieure et radialement intérieure, de révolution radialement intérieure, deux à deux indépendants, c'est-à-dire non liés mécaniquement entre eux, dans l'espace annulaire intérieur, de telle sorte que, lorsque le dispositif de type pneumatique, est soumis à une charge radiale nominale Z et est en contact avec un sol plan par une surface de contact A, les n éléments porteurs, reliés à la portion de structure de révolution radialement extérieure en contact avec le sol, sont soumis à flambage en compression et au moins une partie des éléments porteurs, reliés à la portion de la structure de révolution radialement extérieure non en contact avec le sol, sont en tension,

- chaque élément porteur ayant une force à rupture en traction Fr, et une section moyenne S ayant un rapport de forme K égal à L/E, où L et E sont respectivement la plus grande et la plus petite dimension caractéristique de la section moyenne S,
- la plus petite dimension caractéristique E de la section moyenne S de tout élément porteur étant au plus égale à 0.02 fois la hauteur radiale moyenne H de l'espace annulaire intérieur,
- la densité surfacique D des éléments porteurs par unité de surface de structure de révolution radialement extérieure, exprimée en 1/m², étant au moins égale à Z/(A*∑Fr/n), où Z est la charge radiale nominale, exprimée en N, A est la surface de contact au sol, exprimée en m², et EFr/n la force à rupture en traction moyenne des n éléments porteurs soumis à flambage en compression, exprimée en N,
- et le dispositif de type pneumatique comprenant deux flancs, reliant les extrémités axiales des structures de révolution respectivement radialement extérieure et radialement intérieure et délimitant axialement l'espace annulaire intérieur, de telle sorte que l'espace annulaire intérieur constitue une cavité fermée pouvant être pressurisée par un gaz de gonflage.

Le principe d'un dispositif de type pneumatique selon l'invention est d'avoir une structure porteuse, constituée d'éléments porteurs deux à deux indépendants dans l'espace annulaire intérieur, et capable de porter la charge appliquée au dispositif pneumatique par la mise en tension d'une partie des éléments porteurs positionnés en dehors de l'aire de contact, les n éléments porteurs positionnés dans l'aire de contact étant soumis à flambage en compression et ne participant donc pas au port de la charge appliquée.

Chaque élément porteur s'étend continûment à partir de la structure de révolution radialement extérieure jusqu'à la structure de révolution radialement intérieure, c'est-à-dire selon une trajectoire comprenant une première extrémité en interface avec la structure de révolution radialement extérieure et une deuxième extrémité en interface avec la structure de révolution radialement intérieure.

Les éléments porteurs sont deux à deux indépendants dans l'espace annulaire intérieur, c'est-à-dire non liés mécaniquement entre eux dans l'espace annulaire intérieur, de telle sorte qu'ils ont des comportements mécaniques indépendants. Par exemple, ils ne sont pas liés entre eux de façon à former un réseau ou un treillis. Ils fonctionnent comme des haubans indépendants.

Chaque élément porteur a une force à rupture en traction Fr et une section moyenne S, ces deux caractéristiques n'étant pas nécessairement identiques pour l'ensemble des éléments porteurs. La section moyenne S est la moyenne des sections obtenues par la coupe de l'élément porteur par toutes les surfaces cylindriques, coaxiales aux deux surfaces de révolution respectivement radialement extérieure et radialement extérieure, et radialement comprises entre lesdites deux surfaces de révolution. Dans le cas le plus fréquent d'une section constante, la section moyenne S est la section constante de l'élément porteur. La section moyenne S comprend une plus grande dimension caractéristique L et une plus petite dimension caractéristique E, dont le rapport K=L/E est appelé rapport de forme. A titre d'exemples, un élément porteur ayant une section moyenne S circulaire, ayant un diamètre égal à d, a un rapport de forme K=1, un élément porteur ayant une section moyenne S rectangulaire, ayant une longueur L et une largeur l, a un rapport de forme K=L/l, et un élément porteur ayant une section moyenne S elliptique, ayant un grand axe A et un petit axe a, a un rapport de forme K=A/a.

Selon une première caractéristique essentielle, la plus petite dimension caractéristique E de la section moyenne S de tout élément porteur est au plus égale à 0.02 fois la hauteur radiale moyenne H de l'espace annulaire intérieur. Cette caractéristique exclut tout élément porteur massif, ayant un volume important. En d'autres termes, chaque élément porteur a un élancement élevé, selon la direction radiale, lui permettant de flamber au passage dans l'aire de contact. En dehors de l'aire de contact, chaque élément porteur retrouve sa géométrie initiale, car son flambage est réversible. Un tel élément porteur a une bonne tenue à la fatigue.

Selon une deuxième caractéristique essentielle, la densité surfacique D des éléments porteurs par unité de surface de structure de révolution radialement extérieure, exprimée en 1/m², est au moins égale à Z/(A*∑Fr/n), où Z est la charge radiale nominale, exprimée en N, A est la surface de contact au sol, exprimée en m², et EFr/n la force à rupture en traction moyenne des n éléments porteurs soumis à flambage en compression, exprimée en N. EFr/n est la force à rupture en traction moyenne des n éléments porteurs soumis à flambage en compression, chacun ayant une force à rupture en traction Fr non nécessairement constante sur l'ensemble des éléments porteurs. De façon essentielle, la répartition des éléments porteurs est optimisée et la densité surfacique des éléments porteurs est suffisamment élevée pour garantir une mise à plat de la bande de roulement, au passage dans l'aire de contact, à la fois dans un plan circonférentiel et dans un plan méridien, améliorée par rapport aux pneumatiques classiques et aux autres dispositifs de type pneumatique connus de l'état de la technique. La distribution des éléments porteurs est plus uniformément répartie et plus dense que dans les dispositifs de type pneumatique de l'état de la technique, à la fois circonférentiellement et axialement, ce qui contribue à conférer à la bande de roulement une géométrie quasi cylindrique, avec un effet dit de « mise en marguerite » diminué.

Selon une troisième caractéristique essentielle, le dispositif de type pneumatique de l'invention comprend deux flancs, reliant les extrémités axiales des structures de révolution respectivement radialement extérieure et radialement intérieure et délimitant axialement l'espace annulaire intérieur, de telle sorte que l'espace annulaire intérieur constitue une cavité fermée pouvant être pressurisée par un gaz de gonflage. Les flancs, selon leur conception et, en particulier, selon leur rigidité structurelle, peuvent participer plus ou moins au port de la charge appliquée. Les flancs comprennent généralement au moins un matériau élastomérique et peuvent comprendre éventuellement une armature de renforcement. Les flancs peuvent ou non être liés directement à la structure porteuse. Dans le cas où ils ne sont pas liés directement à la structure porteuse, les flancs ont un comportement mécanique autonome, sans incidence sur le fonctionnement mécanique propre de la structure porteuse. En outre, en combinaison avec les deux structures de révolution respectivement radialement extérieure et radialement intérieure, ils ferment l'espace annulaire intérieur qui constitue alors une cavité fermée pouvant être pressurisée ou non par un gaz de gonflage. Dans le cas d'une pressurisation effective par un gaz de gonflage, le dispositif de type pneumatique présente alors une rigidité pneumatique, due à la pression, qui va également contribuer au port de la charge appliquée. Plus la pression est élevée, plus la contribution de la rigidité pneumatique au port de la charge appliquée est élevée, et, corrélativement, plus la contribution de la rigidité structurelle de la structure porteuse et/ou des flancs et/ou des structures de révolution respectivement radialement extérieure et radialement intérieure au port de la charge appliquée est faible. En l'absence de pressurisation et dans le cas d'une faible rigidité structurelle des flancs, la structure porteuse et les structures de révolution respectivement radialement extérieure et radialement intérieure assurent la totalité du port de la charge, les flancs ne jouant qu'un rôle de protection vis-à-vis des agressions éventuelles par des éléments extérieurs au dispositif de type pneumatique.

La combinaison de ces caractéristiques essentielles permet une mise à plat améliorée de la bande de roulement, en particulier dans un plan méridien, par une augmentation des rayons de courbure méridiens au niveau des extrémités axiales de la bande roulement.

Il en résulte, en particulier, une homogénéisation des pressions dans l'aire de contact au sol, ce qui contribue à une amélioration de la durée de vie en usure et de l'adhérence du dispositif de type pneumatique.

La combinaison de ces caractéristiques essentielles permet également une augmentation des fréquences propres de vibrations du dispositif de type pneumatique, ce qui contribue à l'amélioration du confort vibratoire et acoustique du dispositif de type pneumatique.

Enfin, la résistance au roulement d'un tel dispositif de type pneumatique est sensiblement diminuée, ce qui est favorable à une baisse de la consommation de carburant du véhicule.

La densité surfacique des éléments porteurs par unité de surface de structure de révolution radialement extérieure, exprimée en 1/m², est avantageusement au moins égale à 3*Z/(A*∑Fr/n). Une densité surfacique plus élevée d'éléments porteurs améliore l'homogénéisation des pressions dans l'aire de contact au sol et garantit un coefficient de sécurité plus élevé vis-à-vis de la charge appliquée et vis-à-vis de l'endurance.

La densité surfacique des éléments porteurs par unité de surface de structure de révolution radialement extérieure, exprimée en 1/m², est encore avantageusement au moins égale à 6*Z/(A*∑Fr/n). Une densité surfacique encore plus élevée d'éléments porteurs améliore encore davantage l'homogénéisation des pressions dans l'aire de contact au sol et permet d'augmenter encore le coefficient de sécurité vis-à-vis de la charge appliquée et vis-à-vis de l'endurance.

Avantageusement tous les éléments porteurs ont une force à rupture en traction Fr identique. En d'autres termes, les éléments porteurs ont la même force à rupture en traction, sans avoir nécessairement les mêmes caractéristiques géométriques et/ou les mêmes matériaux constitutifs. Ceci implique que la force à rupture en traction moyenne des n éléments porteurs soumis à flambage en compression EFr/n est égale à la force à rupture en traction Fr de tout élément porteur. Dans ces conditions, la densité surfacique D des éléments porteurs par unité de surface de structure de révolution radialement extérieure, exprimée en 1/m², est au moins égale à Z/(A*Fr), où Z est la charge radiale nominale, exprimée en N, A est la surface de contact au sol, exprimée en m², et Fr la force à rupture en traction de tout élément porteur, exprimée en N. La probabilité de défaillance par rupture en traction des éléments porteurs est ainsi la même en tout point de la structure porteuse.

Selon un mode de réalisation préféré, les éléments porteurs sont identiques, c'est-à-dire que leurs caractéristiques géométriques et leurs matériaux constitutifs sont identiques. En particulier, leurs forces à rupture en traction Fr étant identiques, la densité surfacique D des éléments porteurs par unité de surface de structure de révolution radialement extérieure, exprimée en 1/m², est au moins égale à Z/(A*Fr), où Z est la charge radiale nominale, exprimée en N, A est la surface de contact au sol, exprimée en m², et Fr la force à rupture en traction de tout élément porteur, exprimée en N. Une structure porteuse avec des éléments porteurs identiques a avantageusement un comportement mécanique homogène et présente l'avantage d'une plus grande facilité de fabrication.

Selon une première variante du mode de réalisation préféré, tout élément porteur est unidimensionnel avec un rapport de forme K au plus égal à 3. En d'autres termes, un élément porteur est considéré comme unidimensionnel, quand la plus grande dimension caractéristique L de sa section moyenne S est au plus égale à 3 fois la plus petite dimension caractéristique E de sa section moyenne S. Un élément porteur unidimensionnel a un comportement mécanique de type filaire, c'est-à-dire qu'il ne peut être soumis qu'à des efforts d'extension ou de compression selon sa ligne moyenne. Parmi les composants couramment utilisés dans le domaine du pneumatique, les renforts textiles, constitués par un assemblage de filés textiles, ou les câbles métalliques, constitués par un assemblage de fils métalliques, peuvent être considérés comme des éléments porteurs unidimensionnels, car leur section moyenne S étant sensiblement circulaire, le rapport de forme K est égal à 1, donc inférieur à 3.

Lorsqu'un élément porteur unidimensionnel en extension a une ligne moyenne rectiligne, sa ligne moyenne n'est pas nécessairement radiale, c'est-à-dire perpendiculaire à l'axe de rotation du pneumatique. Un tel élément porteur n'est pas assimilable à un rayon. Cette direction non radiale de la ligne moyenne permet, en particulier, d'ajuster les rigidités du dispositif pneumatique selon les directions respectivement axiale et circonférentielle.

Dans le cas de la première variante du mode de réalisation préféré, la densité surfacique D des éléments porteurs identiques unidimensionnels par unité de surface de structure de révolution radialement extérieure, exprimée en 1/m², est avantageusement au moins égale à 5000.

Selon une deuxième variante du mode de réalisation préféré, tout élément porteur est bidimensionnel avec un rapport de forme K au moins égal à 3. En d'autres termes, un élément porteur est considéré comme bidimensionnel, quand la plus grande dimension caractéristique L de sa section moyenne S est au moins égale à 3 fois la plus petite dimension caractéristique E de sa section moyenne S. Un élément porteur bidimensionnel a un comportement mécanique de type membranaire, c'est-à-dire qu'il ne peut être soumis qu'à des efforts d'extension ou de compression dans son épaisseur définie par la plus petite dimension caractéristique E de sa section moyenne S.

Selon une première alternative de la deuxième variante du mode de réalisation préféré, tout élément porteur est bidimensionnel de type lanière avec un rapport de forme K au moins égal à 3 et au plus égal à 50.

Dans le cas de la première alternative de la deuxième variante du mode de réalisation préféré, la densité surfacique D des éléments porteurs identiques bidimensionnels de type lanière par unité de surface de structure de révolution radialement extérieure, exprimée en 1/m², est avantageusement au moins égale à 600 et au plus égale à 15000.

Selon une deuxième alternative de la deuxième variante du mode de réalisation préféré, tout élément porteur est bidimensionnel de type film avec un rapport de forme K au moins égal à 50.

Dans le cas de la deuxième alternative de la deuxième variante du mode de réalisation préféré, la densité surfacique D des éléments porteurs identiques bidimensionnels de type film par unité de surface de structure de révolution radialement extérieure, exprimée en 1/m², est avantageusement au moins égale à 100 et au plus égale à 1000.

Avantageusement, la plus grande dimension caractéristique L de la section moyenne S d'un élément porteur bidimensionnel de type film est au plus égale à 0.9 fois la plus petite des largeurs axiales des structures de révolution respectivement radialement extérieure et radialement intérieure, les largeurs axiales respectives des structures de révolution respectivement radialement extérieure et radialement intérieure n'étant pas nécessairement égales. Au-delà de cette valeur, l'élément porteur est alors un film dit traversant séparant alors circonférentiellement la cavité intérieure du pneumatique en cellules ou alvéoles.

Lorsqu'un élément porteur bidimensionnel est plan, son plan moyen n'est pas nécessairement radial, c'est-à-dire perpendiculaire à l'axe de rotation du pneumatique. Un tel élément porteur n'est pas assimilable à un rayon. Cette direction non radiale du plan moyen permet, en particulier, d'ajuster les rigidités du dispositif pneumatique selon les directions respectivement axiale et circonférentielle.

En ce qui concerne la nature du matériau, tout élément porteur comprend avantageusement un matériau de type polymère ou métal ou verre ou carbone. Les polymères, en particulier les élastomères, et le métal, tel que l'acier, sont couramment utilisés dans le domaine du pneumatique. Le verre et le carbone sont des matériaux alternatifs envisageables pour une utilisation en pneumatique.

Dans une première variante de matériau, tout élément porteur comprend avantageusement du polyéthylène téréphtalate (PET). Le PET est couramment utilisé dans le domaine du pneumatique, en raison d'un bon compromis entre ses propriétés mécaniques, telles que sa résistance à la rupture en traction, et son coût.

Dans une seconde variante de matériau, tout élément porteur comprend également avantageusement un polyamide aliphatique, tel que du nylon. Le nylon est également couramment utilisé dans le domaine du pneumatique pour les mêmes raisons que le PET.

Selon une première variante de structure, tout élément porteur a une structure homogène, comprenant un seul constituant. C'est la structure la plus simple envisagée, telle que, par exemple, un fil ou une membrane.

Selon une deuxième variante de structure, tout élément porteur a une structure composite, comprenant au moins deux constituants. C'est une structure constituée par un assemblage d'au moins deux éléments, telle que, à titre d'exemple, un câble constitué par un ensemble de fils élémentaires.

Dans une première variante de composition, tout élément porteur comprend un seul matériau: à titre d'exemple, un fil ou un câble en matériau textile.

Dans une deuxième variante de composition, tout élément porteur comprend au moins deux matériaux. Dans ce cas, on a une structure composite du point de vue des matériaux: par exemple, un câble hybride comprenant des fils ayant des matériaux différents, tels que l'aramide et le nylon, ou un tissu comprenant des renforts textiles enrobés dans un matériau élastomérique et disposés parallèlement les uns aux autres ou sous forme de trame.

En ce qui concerne les flancs, avantageusement les flancs ne sont pas liés directement à la structure porteuse. Ils peuvent ou non participer au port de la charge, selon leur propre rigidité structurelle. Dans le cas où ils participent au port de la charge, ils ont un comportement mécanique indépendant et n'interfèrent pas dans le comportement mécanique de la structure porteuse.

Toutefois, dans le cas d'une structure porteuse comprenant des éléments porteurs unidimensionnels et/ou bidimensionnels de type lanière, les éléments porteurs positionnés aux extrémités axiales de la structure porteuse peuvent être liés ou intégrés aux flancs.

Chaque flanc ayant une longueur curviligne L_{F}, la longueur curviligne L_{F} de chaque flanc est avantageusement au moins égale à 1.05 fois, de préférence, 1.15 fois la hauteur radiale moyenne H de l'espace annulaire intérieur. Encore plus avantageusement, la longueur curviligne L_{F} de chaque flanc est au moins égale à 1.3 fois et au plus égale à 1.6 fois la hauteur radiale moyenne H de l'espace annulaire intérieur. Cette caractéristique de longueur de flanc garantit que la déformation du flanc ne va pas perturber la mise à plat méridienne du dispositif de type pneumatique avec une faible courbure.

L'armature circonférentielle de renforcement de la structure de révolution radialement extérieure comprend avantageusement au moins une couche de renforcement comprenant des éléments de renforcement textiles ou métalliques. Pour garantir une rigidité transversale, ou axiale, du dispositif pneumatique, la structure de révolution radialement extérieure comprend une armature de renforcement, comprenant au moins une couche de renforcement constituée par des éléments filaires de renforcement, le plus souvent métalliques ou textiles, enrobés dans un matériau élastomérique. Cette armature de renforcement est le plus souvent radialement intérieure à une bande de roulement. L'ensemble constitué par l'armature de renforcement et de la bande de roulement constitue la virole de révolution radialement extérieure.

La structure de révolution radialement intérieure comprend également avantageusement sur une face radialement intérieure une couche de liaison destinée à être fixée sur le moyen de montage sur le véhicule. La couche de liaison comprend généralement au moins un matériau élastomérique, mais pas nécessairement d'armature de renforcement. La fixation sur le moyen de montage peut être réalisée par les forces de pression résultant du gonflage du dispositif de type pneumatique.

Selon une variante de réalisation, la structure de révolution radialement intérieure comprend sur une face radialement intérieure une couche de liaison destinée à être fixée sur le moyen de montage sur le véhicule, par collage. Une liaison collée permet en particulier d'éviter toute rotation du dispositif de type pneumatique par rapport au moyen de montage sur le véhicule.

L'invention a également pour objet un ensemble monté comprenant un dispositif pneumatique selon l'un des modes de réalisation précédemment décrits, monté sur un moyen de montage sur le véhicule.

Le dispositif de type pneumatique de l'invention peut être fabriqué, par exemple, selon le procédé décrit ci-après. La structure porteuse est fabriquée séparément sous la forme d'une structure composite de type sandwich, constituée par une première couche élastomérique, destinée à être solidarisée à la structure de révolution radialement intérieure, une deuxième couche élastomérique, destinée à être solidarisée à la structure de révolution radialement extérieure et par des éléments porteurs s'étendant depuis la première couche élastomérique jusqu'à la deuxième couche élastomérique. Tout procédé connu de fabrication de structure composite de type sandwich peut être utilisé. Une fois la structure porteuse réalisée, le dispositif de type pneumatique peut être fabriqué selon les étapes de procédé suivantes :
- enroulement de la structure de révolution radialement intérieure sur un cylindre dont le diamètre est égal à celui du moyen de montage, sur lequel est destiné à être monté le dispositif de type pneumatique,
- enroulement de la structure porteuse sur la structure de révolution radialement intérieure
- mise en place des flancs au niveau des extrémités axiales de la structure porteuse de façon à constituer une cavité fermée,
- mise en pression de ladite cavité fermée, pour déployer la structure porteuse,
- enroulement de la structure de révolution radialement extérieure sur la structure porteuse,
- dépressurisation de la cavité fermée jusqu'à la pression atmosphérique ambiante,
- cuisson du dispositif.

L'ensemble monté selon l'invention peut être réalisé par fixation du dispositif de type pneumatique sur un moyen de montage, tel qu'une jante. Cette fixation peut être réalisée, par exemple, par collage de la face radialement intérieure de la structure de révolution radialement intérieure sur la face radialement extérieure du moyen de montage.

La présente invention sera mieux comprise à l'aide des figures 1 à 7 présentées ci-après:
- Figure 1 : vue en perspective et en coupe partielle d'un dispositif de type pneumatique selon l'invention
- Figure 2 : vue d'une coupe circonférentielle d'un dispositif de type pneumatique selon l'invention, dans l'état écrasé
- Figure 3A: vue d'une coupe méridienne d'un dispositif de type pneumatique selon l'invention, dans le cas d'une structure porteuse à éléments porteurs unidimensionnels
- Figure 3B: vue en perspective d'un élément porteur unidimensionnel
- Figure 4A: vue d'une coupe méridienne d'un dispositif de type pneumatique selon l'invention, dans le cas d'une structure porteuse à éléments porteurs bidimensionnels de type lanière
- Figure 4B: vue en perspective d'un élément porteur bidimensionnel de type lanière
- Figure 5A: vue d'une coupe méridienne d'un dispositif de type pneumatique selon l'invention, dans le cas d'une structure porteuse à éléments porteurs bidimensionnels de type film
- Figure 5B: vue en perspective d'un élément porteur bidimensionnel de type film
- Figure 6: courbes-types comparées de l'évolution de la charge appliquée en fonction de la flèche pour un dispositif de type pneumatique selon l'invention (éléments porteurs filaires) et un pneumatique de référence de l'état de la technique.
- Figure 7: courbes-types comparées de l'évolution de la rigidité de dérive en fonction de la charge appliquée pour un dispositif de type pneumatique selon l'invention (éléments porteurs filaires) et un pneumatique de référence de l'état de la technique.

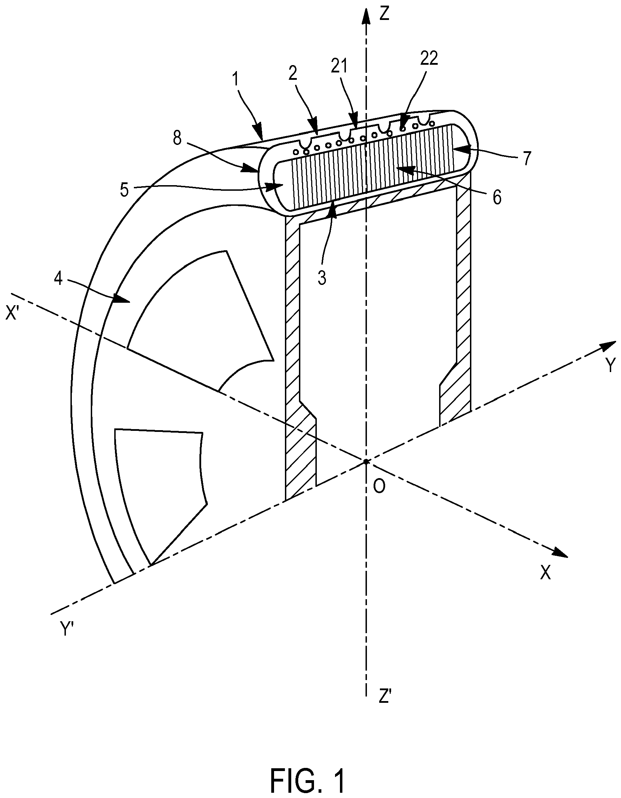

La figure 1 présente une vue en perspective et en coupe partielle d'un dispositif de type pneumatique 1 selon l'invention, monté sur un moyen de montage 4 ou jante, et comprenant une structure de révolution radialement extérieure 2, une structure de révolution radialement intérieure 3, un espace annulaire intérieur 5, une structure porteuse 6 et deux flancs 8. La structure de révolution radialement extérieure 2 a un axe de révolution qui est l'axe de rotation YY' du dispositif de type pneumatique et est destinée à entrer en contact avec un sol par l'intermédiaire d'une bande de roulement 21 comprenant au moins un matériau élastomérique. En outre la structure de révolution radialement extérieure 2 comprend une armature circonférentielle de renforcement 22, constituée, dans le cas présent, par une seule couche de renforcement. La structure de révolution radialement intérieure 3, coaxiale à la structure de révolution radialement extérieure 2, est destinée à assurer la liaison du dispositif de type pneumatique 1 avec le moyen de montage 4. La structure de révolution radialement intérieure 3 comprend au moins un matériau polymérique, le plus souvent un mélange élastomérique. L'espace annulaire intérieur 5 est radialement délimité par les structures de révolution respectivement radialement extérieure 2 et radialement intérieure 3. La structure porteuse 6, selon l'invention, est constituée par une pluralité d'éléments porteurs 7, s'étendant continûment à partir de la structure de révolution radialement extérieure 2 jusqu'à la structure de révolution radialement intérieure 3, deux à deux indépendants dans l'espace annulaire intérieur 5. Enfin, le dispositif de type pneumatique 1 comprend deux flancs 8, reliant les extrémités axiales des structures de révolution respectivement radialement extérieure 2 et radialement intérieure 3 et délimitant axialement l'espace annulaire intérieur 5, de telle sorte que l'espace annulaire intérieur 5 constitue une cavité fermée pouvant être pressurisée par un gaz de gonflage.

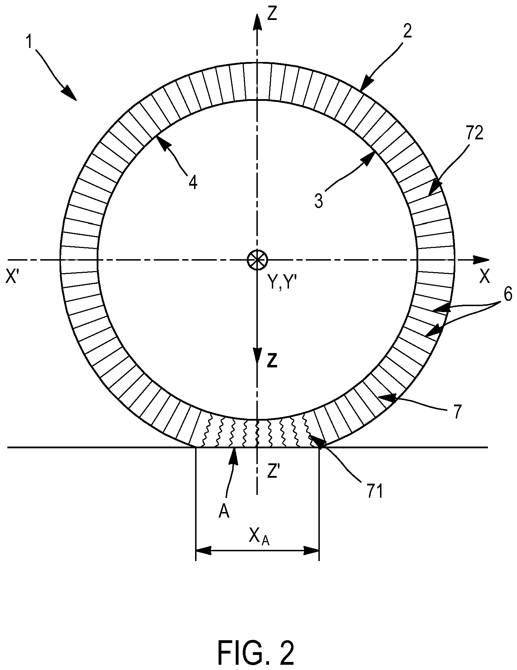

La figure 2 présente une coupe circonférentielle d'un dispositif de type pneumatique 1 selon l'invention, monté sur un moyen de montage 4, dans son état écrasé, c'est-à-dire soumis à une charge radiale nominale Z. La structure porteuse 6 est constituée par une pluralité d'éléments porteurs 7, s'étendant continûment à partir de la structure de révolution radialement extérieure 2 jusqu'à la structure de révolution radialement intérieure 3, deux à deux indépendants dans l'espace annulaire intérieur 5. Le dispositif de type pneumatique 1, soumis à une charge radiale nominale Z, est en contact avec un sol plan par une surface de contact A, ayant une longueur circonférentielle X_{A}. Les éléments porteurs 71, reliés à la portion de structure de révolution radialement extérieure 2 en contact avec le sol, sont soumis à flambage en compression, alors qu'au moins une partie des éléments porteurs 72, reliés à la portion de la structure de révolution radialement extérieure 2 non en contact avec le sol, sont en tension. La figure 2 représente un mode de réalisation particulier de l'invention avec des éléments porteurs 7 identiques et orientés radialement. Conformément à l'invention, la densité surfacique D des éléments porteurs 7 par unité de surface de structure de révolution radialement extérieure 2, exprimée en 1/m², est au moins égale à Z/(A*Fr), où Z est la charge radiale nominale, exprimée en N, A est la surface de contact au sol, exprimée en m², et Fr la force à rupture en traction de tout élément porteur, exprimée en N.

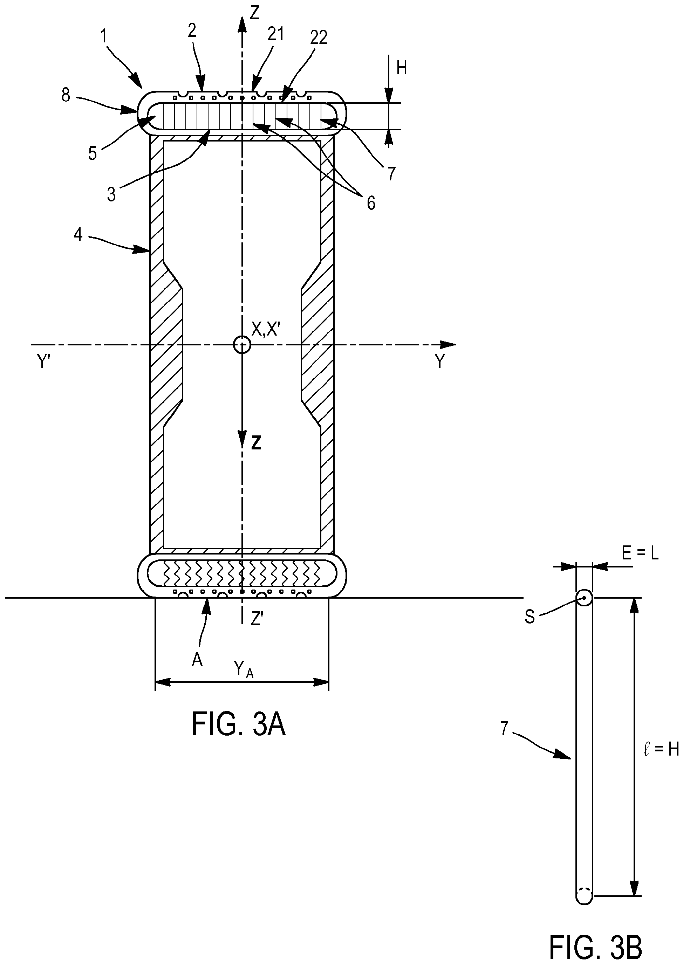

La figure 3A présente une coupe méridienne d'un dispositif de type pneumatique 1 selon l'invention, monté sur un moyen de montage 4, dans le cas d'une structure porteuse 6 à éléments porteurs unidimensionnels 7. Comme décrit pour la figure 1, le dispositif de type pneumatique 1 comprend une structure de révolution radialement extérieure 2, une structure de révolution radialement intérieure 3, un espace annulaire intérieur 5, une structure porteuse 6 et deux flancs 8. Le dispositif de type pneumatique 1, soumis à une charge radiale nominale Z, est en contact avec un sol plan par une surface de contact A, ayant une largeur axiale Y_{A}. Dans le cas présenté, tous les éléments porteurs 7 sont identiques et sont orientés radialement, donc ont une longueur égale à la hauteur radiale moyenne H de l'espace annulaire intérieur 5. Comme vu précédemment, les éléments porteurs 7, positionnés à l'opposé de l'aire de contact sont en tension, alors que les éléments porteurs 7, reliés à la portion de structure de révolution radialement extérieure 2 en contact avec le sol, sont soumis à flambage en compression.

La figure 3B présente un élément porteur 7 unidimensionnel ayant une section moyenne S circulaire, définie par une plus petite dimension caractéristique E et une plus grande dimension caractéristique L toutes deux égales au diamètre du cercle, et caractérisée par son rapport de forme K égal à L/E. La plus petite dimension caractéristique E de la section moyenne S de l'élément porteur 7, c'est-à-dire , dans le cas présent, son diamètre, est au plus égale à 0.02 fois la hauteur radiale moyenne H de l'espace annulaire intérieur 5. De plus, dans ce cas particulier de section circulaire, le rapporte de forme K est égal à 1. L'élément porteur 7 étant orienté radialement, sa longueur 1 est égale à la hauteur moyenne H de l'espace annulaire intérieur 5.

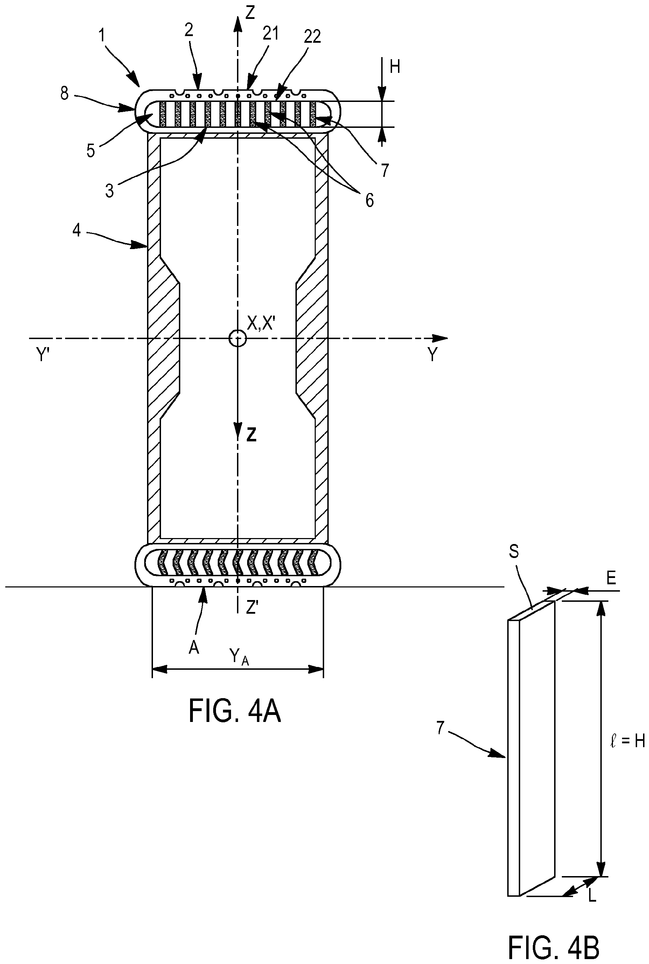

La figure 4A présente une coupe méridienne d'un dispositif de type pneumatique 1 selon l'invention, monté sur un moyen de montage 4, dans le cas d'une structure porteuse 6 à éléments porteurs bidimensionnels 7 de type lanière. Comme décrit pour la figure 1, le dispositif de type pneumatique 1 comprend une structure de révolution radialement extérieure 2, une structure de révolution radialement intérieure 3, un espace annulaire intérieur 5, une structure porteuse 6 et deux flancs 8. Le dispositif de type pneumatique 1, soumis à une charge radiale nominale Z, est en contact avec un sol plan par une surface de contact A, ayant une largeur axiale Y_{A}. Dans le cas présenté, tous les éléments porteurs 7 sont identiques et sont orientés radialement, donc ont une longueur égale à la hauteur radiale moyenne H de l'espace annulaire intérieur 5. Comme vu précédemment, les éléments porteurs 7, positionnés à l'opposé de l'aire de contact sont en tension, alors que les éléments porteurs 7, reliés à la portion de structure de révolution radialement extérieure 2 en contact avec le sol, sont soumis à flambage en compression.

La figure 4B présente un élément porteur 7 bidimensionnel de type lanière ayant une section moyenne S rectangulaire, définie par sa plus petite dimension caractéristique E, ou épaisseur, et sa plus grande dimension caractéristique L, ou largeur, et caractérisée par son rapport de forme K égal à L/E. La plus petite dimension caractéristique E de la section moyenne S de l'élément porteur 7, c'est-à-dire, dans le cas présent, son épaisseur, est au plus égale à 0.02 fois la hauteur radiale moyenne H de l'espace annulaire intérieur 5. Dans le cas d'un élément porteur 7 bidimensionnel de type lanière, le rapport de forme K au moins égal à 3 et au plus égal à 50. L'élément porteur 7 étant orienté radialement, sa longueur 1 est égale à la hauteur moyenne H de l'espace annulaire intérieur 5.

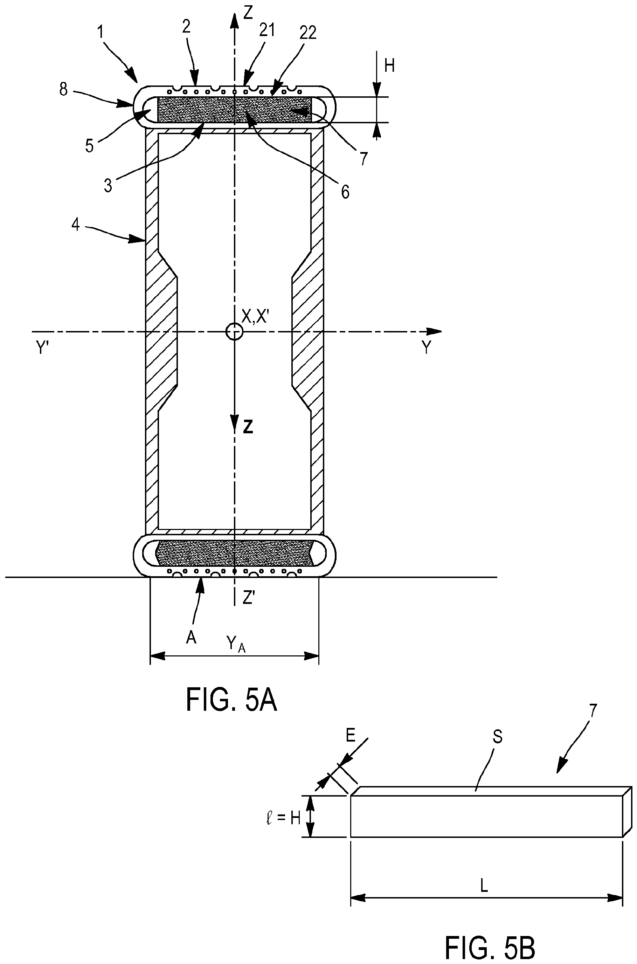

La figure 5A présente une coupe méridienne d'un dispositif de type pneumatique 1 selon l'invention, monté sur un moyen de montage 4, dans le cas d'une structure porteuse 6 à éléments porteurs bidimensionnels 7 de type film. Comme décrit pour la figure 1, le dispositif de type pneumatique 1 comprend une structure de révolution radialement extérieure 2, une structure de révolution radialement intérieure 3, un espace annulaire intérieur 5, une structure porteuse 6 et deux flancs 8. Le dispositif de type pneumatique 1, soumis à une charge radiale nominale Z, est en contact avec un sol plan par une surface de contact A, ayant une largeur axiale Y_{A}. Dans le cas présenté, tous les éléments porteurs 7 sont identiques et sont orientés radialement, donc ont une longueur égale à la hauteur radiale moyenne H de l'espace annulaire intérieur 5. Comme vu précédemment, les éléments porteurs 7, positionnés à l'opposé de l'aire de contact sont en tension, alors que les éléments porteurs 7, reliés à la portion de structure de révolution radialement extérieure 2 en contact avec le sol, sont soumis à flambage en compression.

La figure 5B présente un élément porteur 7 bidimensionnel de type film ayant une section moyenne S rectangulaire, définie par sa plus petite dimension caractéristique E, ou épaisseur, et sa plus grande dimension caractéristique L, ou largeur, et caractérisée par son rapport de forme K égal à L/E. La plus petite dimension caractéristique E de la section moyenne S de l'élément porteur 7, c'est-à-dire, dans le cas présent, son épaisseur, est au plus égale à 0.02 fois la hauteur radiale moyenne H de l'espace annulaire intérieur 5. Dans le cas d'un élément porteur 7 bidimensionnel de type film, le rapport de forme K est au moins égal à 50. L'élément porteur 7 étant orienté radialement, sa longueur 1 est égale à la hauteur moyenne H de l'espace annulaire intérieur 5.

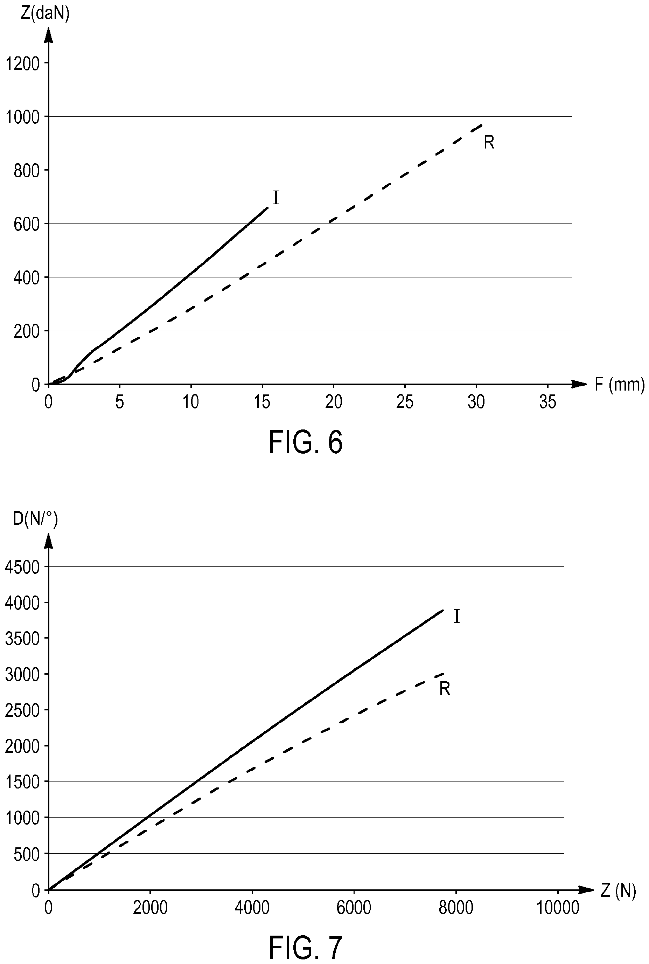

La figure 6 présente deux courbes-types comparées de l'évolution de la charge appliquée Z, exprimée en daN, en fonction de la flèche F, exprimée en mm, pour un dispositif de type pneumatique selon l'invention I, dans le cas d'une structure porteuse à éléments porteurs unidimensionnels identiques, et un pneumatique de référence R de l'état de la technique. Cette figure montre que, pour une charge radiale donnée Z, la flèche F d'un dispositif de type pneumatique selon l'invention I est plus petite que celle du pneumatique de référence R. Autrement, la rigidité radiale du dispositif de type pneumatique I est plus grande que la rigidité radiale du pneumatique de référence R.

La figure 7 présente deux courbes-types comparées de l'évolution de la rigidité de dérive, exprimée en N/°, en fonction de la charge appliquée, exprimée en N, pour un dispositif de type pneumatique selon l'invention, dans le cas d'une structure porteuse à éléments porteurs unidimensionnels identiques, et un pneumatique de référence de l'état de la technique. Cette figure montre que, pour une charge radiale donnée Z, la rigidité de dérive Z d'un dispositif de type pneumatique selon l'invention I est plus grande que celle du pneumatique de référence R.

L'invention a été plus particulièrement étudiée en tant que solution alternative à un pneumatique classique pour véhicule de tourisme.

Le dispositif de type pneumatique étudié, dont les caractéristiques de rigidités sont présentées sur les figures 6 et 7 précédemment décrites, comprend deux structures de révolution radialement extérieure et radialement intérieure ayant des rayons moyens respectifs égaux à 333 mm et 289 mm, et des largeurs axiales toutes deux égales à 250 mm. L'espace annulaire intérieur, radialement délimité par les structures de révolution respectivement radialement extérieure et radialement intérieure, a une hauteur radiale moyenne H égale à 35 mm. La structure porteuse est constituée par des éléments porteurs unidimensionnels de type fils. Chaque élément porteur, en polyéthylène téréphtalate (PET), a une section moyenne S égale à 7*10⁻⁸ m² et une contrainte à rupture égale à 470 MPa. La densité surfacique D des éléments porteurs par unité de surface de structure de révolution radialement extérieure est égale à 85000 fils /m². La structure de type pneumatique, gonflée a une pression p comprise entre 1.5 bar et 2.5 bars, est soumise à une charge radiale Z égale à 1000 daN.

Bien que la structure porteuse selon l'invention soit constituée préférentiellement d'éléments porteurs identiques, à la fois en rapport de forme K, en structure et en matériau, elle peut être constituée par toute combinaison d'éléments porteurs, telle que, par exemple et de façon non exhaustive:
- des éléments porteurs unidimensionnels ayant des rapports de forme K et/ou des structures et/ou des matériaux différents,
- des éléments porteurs bidimensionnels ayant des rapports de forme K et/ou des structures et/ou des matériaux différents,
- des éléments porteurs unidimensionnels et des éléments porteurs bidimensionnels.

## Revendications

1. Dispositif de type pneumatique (1), destiné à équiper un véhicule, comprenant:
- une structure de révolution radialement extérieure (2) dont l'axe de révolution est l'axe de rotation (YY') du dispositif de type pneumatique et destinée à entrer en contact avec un sol par l'intermédiaire d'une bande de roulement (21) comprenant au moins un matériau élastomérique, la structure de révolution radialement extérieure ayant deux extrémités axiales et comprenant une armature circonférentielle de renforcement (22),
- une structure de révolution radialement intérieure (3), coaxiale à la structure de révolution radialement extérieure (2) et destinée à assurer la liaison du dispositif de type pneumatique avec un moyen de montage (4) sur le véhicule, la structure de révolution radialement intérieure (3) ayant deux extrémités axiales et comprenant au moins un matériau polymérique,
- un espace annulaire intérieur (5) de hauteur radiale moyenne H, radialement délimité par les structures de révolution respectivement radialement extérieure (2) et radialement intérieure (3),
- une structure porteuse (6) constituée par une pluralité d'éléments porteurs (7), s'étendant continûment à partir de la structure de révolution radialement extérieure (2) jusqu'à la structure de révolution radialement intérieure (3), deux à deux indépendants, c'est-à-dire non liés mécaniquement entre eux, dans l'espace annulaire intérieur (5), de telle sorte que, lorsque le dispositif de type pneumatique, est soumis à une charge radiale nominale Z et est en contact avec un sol plan par une surface de contact A, les n éléments porteurs (71), reliés à la portion de structure de révolution radialement extérieure (2) en contact avec le sol, sont soumis à flambage en compression et au moins une partie des éléments porteurs (72), reliés à la portion de la structure de révolution radialement extérieure (2) non en contact avec le sol, sont en tension,
- chaque élément porteur (7) ayant une force à rupture en traction Fr, et une section moyenne S ayant un rapport de forme K égal à L/E, où L et E sont respectivement la plus grande et la plus petite dimension caractéristique de la section moyenne S,
**caractérisé en ce que** la plus petite dimension caractéristique E de la section moyenne S de tout élément porteur (7) est au plus égale à 0.02 fois la hauteur radiale moyenne H de l'espace annulaire intérieur (5), **en ce que** la densité surfacique D des éléments porteurs (7) par unité de surface de structure de révolution radialement extérieure (2), exprimée en 1/m², est au moins égale à Z/(A*∑Fr/n), où Z est la charge radiale nominale, exprimée en N, A est la surface de contact au sol, exprimée en m², et EFr/n la force à rupture en traction moyenne des n éléments porteurs soumis à flambage en compression, exprimée en N, **et en ce que** le dispositif de type pneumatique (1) comprend deux flancs (8), reliant les extrémités axiales des structures de révolution respectivement radialement extérieure (2) et radialement intérieure (3) et délimitant axialement l'espace annulaire intérieur (5), de telle sorte que l'espace annulaire intérieur (5) constitue une cavité fermée pouvant être pressurisée par un gaz de gonflage.

2. Dispositif de type pneumatique (1) selon la revendication 1, **dans lequel** la densité surfacique D des éléments porteurs (7) par unité de surface de structure de révolution radialement extérieure (2), exprimée en 1/m², est au moins égale à 3*Z/(A*∑Fr/n).

3. Dispositif de type pneumatique (1) selon l'une des revendications 1 ou 2, **dans lequel** la densité surfacique D des éléments porteurs (7) par unité de surface de structure de révolution radialement extérieure (2), exprimée en 1/m², est au moins égale à 6*Z/(A*∑Fr/n).

4. Dispositif de type pneumatique (1) selon l'une quelconque des revendications 1 à 3, **dans lequel** tous les éléments porteurs (7) ont une force à rupture en traction Fr identique.

5. Dispositif de type pneumatique (1) selon l'une quelconque des revendications 1 à 3, **dans lequel** tous les éléments porteurs (7) sont identiques.

6. Dispositif de type pneumatique (1) selon l'une quelconque des revendications 1 à 5, **dans lequel** tout élément porteur (7) est unidimensionnel avec un rapport de forme K au plus égal à 3.

7. Dispositif de type pneumatique (1) selon l'une quelconque des revendications 1 à 5, **dans lequel** tout élément porteur (7) est bidimensionnel avec un rapport de forme K au moins égal à 3.

8. Dispositif de type pneumatique (1) selon la revendication 7, **dans lequel** tout élément porteur (7) est bidimensionnel de type lanière avec un rapport de forme K au moins égal à 3 et au plus égal à 50.

9. Dispositif de type pneumatique (1) selon la revendication 7, **dans lequel** tout élément porteur (7) est bidimensionnel de type film avec un rapport de forme K au moins égal à 50.

10. Dispositif de type pneumatique (1) selon l'une quelconque des revendications 1 à 9, **dans lequel** tout élément porteur (7) comprend un matériau de type polymère ou métal ou verre ou carbone.

11. Dispositif de type pneumatique (1) selon l'une quelconque des revendications 1 à 10, **dans lequel** tout élément porteur (7) comprend du polyéthylène téréphtalate (PET).

12. Dispositif de type pneumatique (1) selon l'une quelconque des revendications 1 à 11, **dans lequel** tout élément porteur (7) comprend un polyamide aliphatique, tel que du nylon.

13. Dispositif de type pneumatique (1) selon l'une quelconque des revendications 1 à 12, **dans lequel** les flancs (8) ne sont pas liés directement à la structure porteuse (6).

14. Dispositif de type pneumatique (1) selon l'une quelconque des revendications 1 à 13, **dans lequel** l'armature circonférentielle de renforcement (22) de la structure de révolution radialement extérieure (2) comprend au moins une couche de renforcement comprenant des éléments de renforcement textiles ou métalliques.

15. Dispositif de type pneumatique (1) selon l'une quelconque des revendications 1 à 14, **dans lequel** la structure de révolution radialement intérieure (3) comprend sur une face radialement intérieure une couche de liaison destinée à être fixée sur le moyen de montage (4) sur le véhicule.

16. Ensemble monté (1, 4) comprenant un dispositif de type pneumatique (1) selon l'une quelconque des revendications 1 à 15 monté sur un moyen de montage (4) sur le véhicule.

## Patentansprüche

1. Reifenartige Vorrichtung (1), die dazu bestimmt ist, ein Fahrzeug auszurüsten, umfassend:
- eine radial äußere Umdrehungsstruktur (2), deren Umdrehungsachse die Rotationsachse (YY') der reifenartigen Vorrichtung ist, und dazu bestimmt ist, mit einem Boden über eine Lauffläche (21), umfassend mindestens ein Elastomermaterial, in Kontakt zu treten, wobei die radial äußere Umdrehungsstruktur zwei axiale Enden hat und eine Umfangsverstärkungsbewehrung (22) umfasst,
- eine radial innere Umdrehungsstruktur (3), die zu der radial äußeren Umdrehungsstruktur (2) koaxial ist, und dazu bestimmt ist, die Verbindung der reifenartigen Vorrichtung mit einem Mittel (4) zur Montage auf dem Fahrzeug zu gewährleisten, wobei die radial innere Umdrehungsstruktur (3) zwei axiale Enden hat und mindestens ein Polymermaterial umfasst,
- einen ringförmigen Innenraum (5) von mittlerer radialer Höhe H, der radial durch die radial äußere (2) bzw. radial innere (3) Umdrehungsstruktur begrenzt ist,
- eine Tragstruktur (6), die von einer Vielzahl von Tragelementen (7) gebildet ist, die sich kontinuierlich von der radial äußeren Umdrehungsstruktur (2) bis zu der radial inneren Umdrehungsstruktur (3) paarweise unabhängig, d. h. nicht mechanisch miteinander verbunden, in dem ringförmigen Innenraum (5) erstrecken, so dass, wenn die reifenartige Vorrichtung einer radialen Nominallast Z ausgesetzt ist und mit einem ebenen Boden über eine Kontaktfläche A in Kontakt ist, die n Tragelemente (71), die mit dem radial äußeren Umdrehungsstrukturabschnitt (2), der mit dem Boden in Kontakt ist, verbunden sind, einer Knickbelastung ausgesetzt sind und mindestens ein Teil der Tragelemente (72), die mit dem radial äußeren Umdrehungsstrukturabschnitt (2), der nicht mit dem Boden in Kontakt ist, verbunden sind, unter Spannung ist,
- wobei jedes Tragelement (7) eine Reißfestigkeit Fr und einen mittleren Querschnitt S mit einem Formverhältnis K gleich L/E hat, wobei L und E die größte bzw. die kleinste charakteristische Dimension des mittleren Querschnitts S sind,
**dadurch gekennzeichnet, dass** die kleinste charakteristische Dimension E des mittleren Querschnitts S jedes Trageelements (7) höchstens gleich 0,02-mal die mittlere radiale Höhe H des ringförmigen Innenraums (5) ist, dass die Flächendichte D der Tragelemente (7) pro Flächeneinheit einer radial äußeren Umdrehungsstruktur (2), ausgedrückt in 1/m², mindestens gleich Z/(A*∑Fr/n) ist, wobei Z die radiale Nominallast, ausgedrückt in N, ist, A die Kontaktfläche mit dem Boden, ausgedrückt in m², ist, und ∑Fr/n die mittlere Reißfestigkeit der n Tragelemente, die einer Knickbelastung ausgesetzt sind, ausgedrückt in N ist, und dass die reifenartige Vorrichtung (1) zwei Seiten (8) umfasst, die die axialen Enden der radial äußeren (2) bzw. radial inneren (3) Umdrehungsstrukturen verbinden und axial den ringförmigen Innenraum (5) begrenzen, so dass der ringförmige Innenraum (5) einen geschlossenen Hohlraum darstellt, der mit einem Aufblasgas unter Druck gesetzt werden kann.

2. Reifenartige Vorrichtung (1) nach Anspruch 1, bei der die Flächendichte D der Tragelemente (7) pro Flächeneinheit einer radial äußeren Umdrehungsstruktur (2), ausgedrückt in l/m², mindestens gleich 3*Z/(A*∑Fr/n) ist.

3. Reifenartige Vorrichtung (1) nach einem der Ansprüche 1 oder 2, bei der die Flächendichte D der Tragelemente (7) pro Flächeneinheit einer radial äußeren Umdrehungsstruktureinheit (2), ausgedrückt in 1/m², mindestens gleich 6*Z/(A*∑Fr/n) ist.

4. Reifenartige Vorrichtung (1) nach einem der Ansprüche 1 bis 3, bei der alle Tragelemente (7) eine identische Reißfestigkeit Fr haben.

5. Reifenartige Vorrichtung (1) nach einem der Ansprüche 1 bis 3, bei der alle Tragelemente (7) identisch sind.

6. Reifenartige Vorrichtung (1) nach einem der Ansprüche 1 bis 5, bei der jedes Tragelement (7) eindimensional mit einem Formverhältnis K höchstens gleich 3 ist.

7. Reifenartige Vorrichtung (1) nach einem der Ansprüche 1 bis 5, bei der jedes Tragelement (7) zweidimensional mit einem Formverhältnis K mindestens gleich 3 ist.

8. Reifenartige Vorrichtung (1) nach Anspruch 7, bei der jedes Tragelement (7) zweidimensional vom Typ Leine mit einem Formverhältnis K mindestens gleich 3 und höchstens gleich 50 ist.

9. Reifenartige Vorrichtung (1) nach Anspruch 7, bei der jedes Tragelement (7) zweidimensional vom Typ Folie mit einem Formverhältnis K mindestens gleich 50 ist.

10. Reifenartige Vorrichtung (1) nach einem der Ansprüche 1 bis 9, bei der jedes Tragelement (7) ein Material vom Typ Polymer oder Metall oder Glas oder Kohlenstoff umfasst.

11. Reifenartige Vorrichtung (1) nach einem der Ansprüche 1 bis 10, bei der jedes Tragelement (7) Polyethylenterephthalat (PET) umfasst.

12. Reifenartige Vorrichtung (1) nach einem der Ansprüche 1 bis 11, bei der jedes Tragelement (7) ein aliphatisches Polyamid, wie Nylon, umfasst.

13. Reifenartige Vorrichtung (1) nach einem der Ansprüche 1 bis 12, bei der die Seiten (8) nicht direkt mit der Tragstruktur (6) verbunden sind.

14. Reifenartige Vorrichtung (1) nach einem der Ansprüche 1 bis 13, bei der die Umfangsverstärkungsbewehrung (22) der radial äußeren Umdrehungsstruktur (2) mindestens eine Verstärkungslage, umfassend textile oder metallische Verstärkungselemente, umfasst.

15. Reifenartige Vorrichtung (1) nach einem der Ansprüche 1 bis 14, bei der die radial innere Umdrehungsstruktur (3) auf einer radial inneren Fläche eine Verbindungslage umfasst, die dazu bestimmt ist, auf dem Mittel (4) zur Montage auf dem Fahrzeug befestigt zu werden.

16. Montierte Einheit (1, 4), umfassend eine reifenartige Vorrichtung (1) nach einem der Ansprüche 1 bis 15, die auf einem Mittel (4) zur Montage auf dem Fahrzeug montiert ist.

## Claims

1. Tyre-type device (1) intended to equip a vehicle, comprising:
- a radially outer structure of revolution (2), the axis of revolution of which is the axis of rotation (YY') of the tyre-type device and which is intended to come into contact with the ground via a tread (21) comprising at least one elastomeric material, the radially outer structure of revolution having two axial ends and comprising a circumferential reinforcement (22),
- a radially inner structure of revolution (3) that is coaxial with the radially outer structure of revolution (2) and is intended to ensure the connection of the tyre-type device with a means (4) for mounting on the vehicle, the radially inner structure of revolution (3) having two axial ends and comprising at least one polymeric material,
- an inner annular space (5) of mean radial height H that is radially delimited by the radially outer (2) and radially inner (3) structures of revolution, respectively,
- a bearing structure (6) made up of a plurality of bearing elements (7) that extend continuously from the radially outer structure of revolution (2) to the radially inner structure of revolution (3) and are independent in pairs, that is to say are not mechanically connected together, in the inner annular space (5), such that, when the tyre-type device is subjected to a nominal radial load Z and is in contact with flat ground via an area of contact A, the n bearing elements (71) that are connected to that portion of the radially outer structure of revolution (2) in contact with the ground are made to buckle under compression and at least some of the bearing elements (72) that are connected to that portion of the radially outer structure of revolution (2) that is not in contact with the ground are under tension,
- each bearing element (7) having a force at break under tension Fr, and a mean section S that has an aspect ratio K equal to L/E, where L and E are the largest and smallest characteristic dimensions, respectively, of the mean section S,
**characterized in that** the smallest characteristic dimension E of the mean section S of any bearing element (7) is at most equal to 0.02 times the mean radial height H of the inner annular space (5), **in that** the surface density D of the bearing elements (7) per unit area of the radially outer structure of revolution (2), expressed in 1/m², is at least equal to Z/(A*∑Fr/n), where Z is the nominal radial load, expressed in N, A is the area of contact with the ground, expressed in m², and ∑Fr/n is the mean force at break under tension of the n bearing elements made to buckle under compression, expressed in N, **and in that** the tyre-type device (1) comprises two sidewalls (8) that connect the axial ends of the radially outer (2) and radially inner (3) structures of revolution, respectively, and axially delimit the inner annular space (5), such that the inner annular space (5) forms a closed cavity that can be pressurized by an inflation gas.

2. Tyre-type device (1) according to Claim 1, **wherein** the surface density D of the bearing elements (7) per unit area of the radially outer structure of revolution (2), expressed in 1/m², is at least equal to 3*Z/(A*∑Fr/n).

3. Tyre-type device (1) according to either of Claims 1 and 2, **wherein** the surface density D of the bearing elements (7) per unit area of the radially outer structure of revolution (2), expressed in 1/m², is at least equal to 6*Z/(A*∑Fr/n).

4. Tyre-type device (1) according to any one of Claims 1 to 3, **wherein** all of the bearing elements (7) have an identical force at break under tension Fr.

5. Tyre-type device (1) according to any one of Claims 1 to 3, **wherein** all of the bearing elements (7) are identical.

6. Tyre-type device (1) according to any one of Claims 1 to 5, **wherein** any bearing element (7) is one-dimensional with an aspect ratio K at most equal to 3.

7. Tyre-type device (1) according to any one of Claims 1 to 5, **wherein** any bearing element (7) is two-dimensional with an aspect ratio K at least equal to 3.

8. Tyre-type device (1) according to Claim 7, **wherein** any bearing element (7) is two-dimensional of the strip type with an aspect ratio K at least equal to 3 and at most equal to 50.

9. Tyre-type device (1) according to Claim 7, **wherein** any bearing element (7) is two-dimensional of the film type with an aspect ratio K at least equal to 50.

10. Tyre-type device (1) according to any one of Claims 1 to 9, **wherein** any bearing element (7) comprises a material of the polymer or metal or glass or carbon type.

11. Tyre-type device (1) according to any one of Claims 1 to 10, **wherein** any bearing element (7) comprises polyethylene terephthalate (PET).

12. Tyre-type device (1) according to any one of Claims 1 to 11, **wherein** any bearing element (7) comprises an aliphatic polyamide, such as nylon.

13. Tyre-type device (1) according to any one of Claims 1 to 12, **wherein** the sidewalls (8) are not directly connected to the bearing structure (6).

14. Tyre-type device (1) according to any one of Claims 1 to 13, **wherein** the circumferential reinforcement (22) of the radially outer structure of revolution (2) comprises at least one reinforcing layer comprising textile or metal reinforcing elements.

15. Tyre-type device (1) according to any one of Claims 1 to 14, wherein the radially inner structure of revolution (3) comprises, on a radially inner face, a connecting layer intended to be fixed to the means (4) for mounting on the vehicle.

16. Mounted assembly (1, 4) comprising a tyre-type device (1) according to any one of Claims 1 to 15 mounted on a means (4) for mounting on the vehicle.
